# EUROPÄISCHE PATENTSCHRIFT

(11) **EP 2 238 792 B1**
(45) Veröffentlichungstag und Bekanntmachung des Hinweises auf die Patenterteilung: **12.11.2014**
(21) Anmeldenummer: 09703585.1
(22) Anmeldetag: 19.01.2009
(51) Int. Cl.: H04W 48/04

(54) **VERFAHREN ZUR UNTERDRÜCKUNG EINER NUTZUNG EINES MOBILFUNKNETZES IN EINEM GEBIET**
METHOD FOR SUPPRESSING USE OF A MOBILE PHONE NETWORK IN AN AREA
PROCÉDÉ DE SUPPRESSION D'UTILISATION D'UN RÉSEAU DE TÉLÉPHONIE MOBILE DANS UNE RÉGION

(30) Priorität: 25.01.2008 DE 102008006231
(43) Veröffentlichungstag der Anmeldung: 13.10.2010
(73) Patentinhaber: Vodafone Holding GmbH, 40213 Düsseldorf (DE)
(72) Erfinder: SCHORK, Karl, 10347 Berlin (DE); WILLIMOWSKI, Ingo, 47475 Kamp-Lintfort (DE)
(74) Vertreter: Bals, Rüdiger
(86) Internationale Anmeldenummer: PCT/EP2009/050560
(87) Internationale Veröffentlichungsnummer: WO 2009/092693

(56) Entgegenhaltungen:
- EP-A- 1 435 749
- US-A- 6 167 274
- US-A1- 2004 228 460

## Beschreibung

Die Erfindung betrifft ein Verfahren zur Unterdrückung einer Nutzung eines Mobilfunknetzes in einem Gebiet. Weiterhin betrifft die Erfindung eine Prüfungseinheit zur Unterdrückung einer Nutzung eines Mobilfunknetzes in einem Gebiet.

Heutzutage werden Verfahren zur Unterdrückung einer Nutzung eines Mobilfunknetzes vorrangig in Justizvollzugsanstalten (JVA) genutzt, um Insassen der JVA eine unkontrollierte Kommunikation mittels eines Mobiltelefons mit der Außenwelt zu verwähren. Dazu werden insbesondere Störsender genutzt, welche eine Kommunikationsverbindung zwischen dem Mobiltelefon und dem Mobilfunknetz unterdrücken. Als nachteilig hat es sich herausgestellt, dass solcher Art Störsender ein Störfeld erzeugen, welches nur schwerlich räumlich einzugrenzen ist. Dadurch werden insbesondere Anwohner, die in der Nähe der JVA leben, in ihren Möglichkeiten zur Nutzung des Mobilfunknetzes eingeschränkt.

In der US 2004/0228460 A1 wird ein Verfahren bzw. eine Vorrichtung offenbart, in welcher die Unterdrückung einzelner Funktionalitäten eines Mobilfunkgerätes das Ziel ist. Dabei wird unter Anderem eine Ortsabhängigkeit dieser Unterdrückung offenbart. Jedoch ist der Ort immer vorher exakt zu bestimmen, um die notwendige Unterdrückung durchzuführen. Eine Variation der Verfahrensschritte in Abhängigkeit unterschiedlicher genereller Lagen in bestimmten Positionsgebieten ist in diesem Verfahren in diesem Dokument nicht offenbart. Insbesondere muss für das Verfahren immer eine aufwendige vollständige Positionsbestimmung durchgeführt werden, da eine Mehrstufigkeit hinsichtlich eines Positionsgebietes unter einer, abhängig von diesem Positionsgebiet, möglicherweise noch notwendigen exakten Bestimmungen der Realposition nicht offenbart ist.

Aufgabe der Erfindung ist es, ein Verfahren zur Unterdrückung einer Nutzung eines Mobilfunknetzes zu schaffen, das die oben genannten Nachteile vermeidet und dabei möglichst geringe Auswirkungen auf eine Versorgung eines Gebietes außerhalb der JVA mit Mobilfunkdiensten hat.

Die Aufgabe wird erfindungsgemäß gelöst durch ein Verfahren zur Unterdrückung einer Nutzung eines Mobilfunknetzes in einem Gebiet mit den Merkmalen des unabhängigen Patentanspruches 1. Gleichfalls wird die Aufgabe gelöst durch eine Prüfungseinheit zur Unterdrückung einer Nutzung eines Mobilfunknetzes in einem Gebiet mit den Merkmalen des unabhängigen Anspruchs 14. In den abhängigen Ansprüchen sind jeweils bevorzugte Weiterbildungen der Erfindung aufgeführt. Details und Merkmale, die im Zusammenhang mit dem erfindungsgemäßen Verfahren beschrieben werden, gelten dabei selbstverständlich auch für die Vorrichtung und umgekehrt.

Die erfindungsgemäße Aufgabe wird gelöst durch ein Verfahren zur Unterdrückung einer Nutzung eines Mobilfunknetzes in einem Gebiet, wobei zumindest ein Teil des Gebiets von einem ersten Positionsgebiet überdeckt wird, eine Prüfungseinheit eine Verbindung mit dem Mobilfunknetz für ein Endgerät innerhalb des ersten Positionsgebiets in Abhängigkeit von wenigstens einer Regel unterdrückt, ein zweites Positionsgebiet zumindest bereichsweise an das erste Positionsgebiet grenzt, für ein Endgerät innerhalb des zweiten Positionsgebiets eine Position bestimmt wird, die Prüfungseinheit eine Verbindung des Endgeräts bei einer Position innerhalb des Gebiets unterdrückt und die Prüfungseinheit eine Verbindung des Endgeräts bei einer Position außerhalb des Gebiets ermöglicht, ein drittes Positionsgebiet zumindest bereichsweise an das zweite Positionsgebiet grenzt, und die Prüfungseinheit eine Verbindung eines Endgeräts innerhalb des dritten Positionsgebiets ermöglicht.

Im Rahmen des erfindungsgemäßen Verfahrens kommuniziert das Endgerät mit dem Mobilfunknetz. Diese Kommunikation kann uni- und/oder bidirektional verlaufen, führt aber in jedem Fall dazu, dass das Mobilfunknetz Kenntnis von dem Endgerät erlangt. Ziel dieser Kommunikation ist es im Allgemeinen, dass mittels des Endgerätes eine Verbindung zu dem Mobilfunknetz aufgebaut werden soll. Diese Verbindung dient dann zur Übermittlung von Sprachdaten oder sonstigen Informationen von einem Nutzer des Endgerätes an das Mobilfunknetz. Erfindungsgemäß ist nun vorgesehen, dass die Prüfungseinheit registriert, in welchem der drei Positionsgebiete sich das Endgerät aufhält. Die dabei bestimmte Lage des Endgerätes ist nicht zwangsläufig mit einem geografischen Ort verbunden. Vielmehr reicht die Kenntnis darüber, dass das Endgerät an einem beliebigen Ort in einer der drei Positionsgebiete anzufinden ist. Je nachdem, in welchem der drei Positionsgebiete sich das Endgerät befindet, werden von der Prüfungseinheit weitere, im erfindungsgemäßen Verfahren beschriebene Schritte vorgenommen. Dabei ist der einfachste Ablauf jener, der für ein Endgerät innerhalb des dritten Positionsgebietes vorgenommen wird. Hierbei wird eine direkte Verbindung zwischen dem Endgerät und dem Mobilfunknetz ermöglicht. Folglich kann ein Nutzer des Endgerätes mittels des Mobilfunknetzes mit einem weiteren Endgerät kommunizieren. Erkennt die Prüfungseinheit, dass sich das Endgerät in dem ersten Positionsgebiet befindet, wird die Verbindung mit dem Mobilfunknetz in Abhängigkeit von einer Regel unterdrückt. Diese Regel wird im Vorhinein festgelegt und bestimmt wann eine Verbindung aufzubauen ist und wann nicht. Dabei hat die geografische Position des Endgerätes innerhalb des ersten Positionsgebietes im Allgemeinen keinen Einfluss auf die Regel. Vielmehr handelt es sich bei der Regel um ein im Vorhinein bestimmtes Auswahlkriterium bezüglich der Teilnehmer. Befindet sich hingegen das Endgerät in dem zweiten Positionsgebiet, reicht die Bestimmung der Lage des Endgerätes nicht mehr aus. Das zweite Positionsgebiet weist erfindungsgemäß einerseits Bereiche auf, in denen eine Verbindung unterdrückt werden soll und andererseits Bereiche in denen eine Verbindung ermöglicht werden soll. Ist beispielsweise das Gebiet in dem die Nutzung des Mobilfunknetzes unterdrückt werden soll eine JVA, so wäre das zweite Positionsgebiet etwa im Bereich um die Außenmauern angeordnet. Für einen Insassen innerhalb der JVA soll im Rahmen des erfindungsgemäßen Verfahrens sichergestellt werden, dass dieser keine Verbindung mit dem Mobilfunknetz aufbauen kann. Allerdings soll die Nutzung von Endgeräten für Benutzer, die in der Nähe der JVA wohnen, problemlos möglich sein. Deshalb wird im Rahmen des erfindungsgemäßen Verfahrens die exakte geografische Position des Endgerätes innerhalb des zweiten Positionsgebietes bestimmt. Bei der zu bestimmenden Position handelt es sich nicht mehr nur um die Lage des Endgerätes - innerhalb oder außerhalb des Positionsgebietes -, sondern um den exakten geografischen Punkt, auf dem sich das Endgerät befindet. Mit dieser Information ermittelt die Prüfungseinheit, ob das Endgerät innerhalb oder außerhalb jenes Gebietes anzufinden ist, in dem eine Nutzung des Mobilfunknetzes unterdrückt werden soll.

Unter dem Begriff Mobilfunknetz ist insbesondere ein Telekommunikationsnetzwerk zu verstehen, das für die Abwicklung von Telefongesprächen konstruiert ist. Bei einem solchen Mobilfunknetz können der Empfänger und prinzipiell auch der Sender mobil eingesetzt werden. Dabei umfasst die Kommunikation in einem Mobilfunknetz sämtliche Kommunikationen zu Wasser, zu Lande und in der Luft. Die Kommunikation reicht vom Privatbereich mit der schnurlosen Telefonie (CT und DECT) und Bluetooth, über alle Mobilfunknetze für die Sprachkommunikation (GSM, UMTS, 4G), den Bündelfunk, Betriebsfunk und Funkruf bis hin zur Satellitenkommunikation. Im Rahmen des erfindungsgemäßen Verfahrens bzw. der Prüfungseinheit kann das Endgerät wenigstens eines der folgenden sein: ein Mobiltelefon, ein PDA, ein Computer, ein Notebook oder ein PCMCIA (Personal Computer Memory Card International Association) Modem.

Moderne Mobilfunknetze weisen häufig eine hoch granulare Architektur auf. Das eigentliche Endgerät tritt über eine Luftschnittstelle mit einer Basisstation in Kontakt. Häufig werden eine Mehrzahl von Basisstationen von einer Feststationssteuerung (z.B. BSC, Base Station Controller und/oder RNC, Radio Network Controller) überwacht. Die Kombination aus Basisstationen und Feststationssteuerungen wird im Allgemeinen als Zugangsnetz bezeichnet. Das Zugangsnetz beinhaltet dabei alle Funktionalitäten, die zur Herstellung des Funkzuganges auf physikalischer Ebene notwendig sind. Dieses Zugangsnetz ist wiederum verbunden mit einem Kernnetz. Das Kernnetz dient zur Verwaltung der Teilnehmer einschließlich ihrer Authentifizierung, der Abrechnung der Dienstleistungen sowie der Verwaltung der Mobilität der Endgeräte. Zusätzlich dient es als Kontaktstelle mit kabelgebundenen Einheiten des Mobilfunknetzes. Das erfindungsgemäße Verfahren soll für aktuelle und zukünftige Mobilfunknetze anwendbar sein. Zur Verdeutlichung wird im Rahmen der Beschreibung aber häufig auf Komponenten Bezug genommen, welche in GSM (Global System for Mobile Communications) und/oder UMTS (Universal Mobile Telecommunications System) Netzen Nutzung finden. Dieses soll nicht als Einschränkung verstanden werden, sondern dient vielmehr nur zur Verdeutlichung der einzelnen Komponenten.

Eine vorteilhafte Ausführungsvariante des erfindungsgemäßen Verfahrens zeichnet sich dadurch aus, dass das erste Positionsgebiet zumindest von einer ersten Basisstation, das zweite Positionsgebiet zumindest von einer zweiten Basisstation und das dritte Positionsgebiet zumindest von einer dritten Basisstation aufgespannt werden. Handelt es sich bei dem zu überwachenden Gebiet beispielhaft um eine alleinstehende Justizvollzugsanstalt (JVA), so kann in dieser vorteilhaften Ausführungsvariante eine erste Basisstation an einer zentralen Stelle innerhalb der JVA aufgestellt werden. So ist sichergestellt, dass sich Endgeräte, welche sich innerhalb der JVA befinden, vorzugsweise mit dieser ersten Basisstation in Verbindung setzen. Die Überwachung des zweiten Positionsgebietes wird dadurch erleichtert, wenn weitere zweite Basisstationen um das Gelände der JVA angeordnet sind. So ist es beispielhaft denkbar, an jeder der Längsseiten jeweils eine zweite Basisstation anzuordnen. Diese Anordnung hätte den Vorteil, dass nur die zweiten Basisstationen, welche das zweite Positionsgebiet aufspannen, eine genaue Positionsbestimmung des Endgerätes vornehmen müssten. Es wäre von vornherein definiert, dass nicht etwa die dritten oder die erste Basisstation eine Bestimmung der Position des Endgerätes durchführen müssen. Diese Variante hat sich insbesondere dann als vorteilhaft erwiesen, wenn das zu überdeckende Gebiet eine große Fläche aufweist. Je nachdem welcher Mobilfunknetzstandard Verwendung findet - GSM oder UMTS - kann es sich bei der ersten und/oder der zweiten und/oder der dritten Basisstation um wenigstens eine der folgenden handeln: eine BTS (Base Transceiver Station) oder einen Note-B.

Im Rahmen des erfindungsgemäßen Verfahrens kann die Prüfungseinheit des Kommunikationsnetzes mit dem Endgerät kommunizieren. Dabei wird zwischen der Prüfungseinheit und dem Endgeräte eine Verbindung aufgebaut, so dass die Prüfungseinheit bestimmen kann, innerhalb welcher der drei Positionsgebiete sich das Endgerät befindet. Im Rahmen dieser Ausführungsvariante ist die Prüfungseinheit in dem Verbindungsaufbau des Endgerätes mit dem Mobilfunknetz direkt integriert. Um diese Ausführungsvariante umzusetzen, hat es sich als vorteilhaft erwiesen, wenn jede Basisstation eine Prüfungseinheit aufweist.

Alternativ ist es in einer weiteren vorteilhaften Ausgestaltung des erfindungsgemäßen Verfahrens möglich, die Prüfungseinheit in einem Kernnetz des Mobilfunknetzes zu integrieren. Dabei wird die Prüfungseinheit nicht mehr in eine der dezentralen Komponenten des Zugangsnetzes eingebaut. Vielmehr weist das Kernnetz die Prüfungseinheit auf und erhält aus den Komponenten des Zugangsnetzes bzw. den Basisstationen die benötigten Informationen zur Ausführung des erfindungsgemäßen Verfahrens. Dabei lassen sich zwei Varianten unterscheiden. In der ersten Variante erhält die Prüfungseinheit Informationen darüber, in welchem Positionsgebiet sich das Endgerät befindet und entscheidet im Anschluss daran, welche der weiteren Verfahrensschritte vorgenommen werden müssen. Alternativ dazu besteht in der zweiten Variante die Möglichkeit, dass die Positionseinheit eine Information über den tatsächlichen Ort des Endgerätes enthält und entscheiden muss, in welchem Positionsgebiet sich dieses befindet. Diese zentrale Anordnung der Prüfungseinheit hat den Vorteil, dass auch größere Gebiete, welche eine Mehrzahl von Basisstationen/Feststationssteuerungen umfassen, mittels einer Prüfungseinheit überwacht werden können.

Weist das zu überwachende Gebiet eine nur begrenzte Fläche auf, hat es sich als vorteilhaft erwiesen die Prüfungseinheit nicht in dem Kernnetz, sondern in einem Teil des Zugangsnetzes zu integrieren. Dabei ist insbesondere ein Einfügen der Prüfungseinheit in eine BSC (Base Station Controller) oder RNC (Radio Network Controller) des Mobilfunknetzes nützlich. Denn im Allgemeinen überwacht eine der genannten Feststationsteuerungen eine Mehrzahl von Basisstationen, welche alle drei Positionsgebiete aufspannen können. Somit verbleibt die Prüfungseinheit in örtlicher Nähe zu dem zu überwachenden Gebiet. Dabei sind vorzugsweise wenigstens die erste und/oder die zweite und/oder die dritte Basisstation an das BSC und/oder das RNC angeschlossen. Möglich ist aber auch ein Anschluss der ersten und der zweiten und der dritten Basisstation an die BSC oder die RNC.

Im Rahmen des erfindungsgemäßen Verfahrens, kann das Endgerät vor dem Aufbau der Verbindung einen Signalisierungskanal abhören. Dieser Signalisierungskanal dient dazu, dem Endgerät Informationen über das Mobilfunknetz zu übermitteln. Als vorteilhaft hat es sich dabei erwiesen, wenn die erste und/oder die zweite und/oder die dritte Basisstation auf dem Signalisierungskanal Informationen über das Mobilfunknetz senden. Wird ein Endgerät aktiviert, so kann dieses den Signalisierungskanal abhören. Die dabei empfangenen Informationen ermöglichen es dem Endgerät all jene Einstellungen vorzunehmen die notwendig sind, um eine Verbindung mit dem Mobilfunknetz aufzubauen. So können beispielsweise über den Signalisierungskanal jene Frequenzen übermittelt werden, die von den Basisstationen abgehört werden und über die eine Verbindung möglich ist. Vorteilhafterweise senden die erste und/oder die zweite und/oder die dritte Basisstation auf dem Signalisierungskanal netzwerkspezifische Parameter, wie etwa Laufzeit- und Synchronisationsinformationen. Als besonders bevorzugt hat es sich herausgestellt, wenn ein Teil des Signalisierungskanal ein Broadcast Control Channel (BCCH) ist. Der BCCH ist ein Kontrollkanal, über den von der Basisstation Daten über ein GSM-Netz unidirektional ausgestrahlt werden.

Im Rahmen des erfindungsgemäßen Verfahrens werden Verbindungen des Endgerätes mit dem Mobilfunknetz innerhalb des ersten Positionsgebietes in Abhängigkeit von wenigstens einer Regel unterdrückt. Die Art der Regel, welche für eine Auswahl jener Endgeräte sorgt, deren Verbindung mit dem Mobilfunknetz zugelassen oder unterdrückt wird, ist häufig abhängig von der Nutzung des zu überwachenden Gebietes. So kann die Regel nur eine maximale Anzahl von Endgeräten zulassen, welche sich mit dem Mobilfunknetz verbinden können. Gleichfalls denkbar ist es, dass in Abhängigkeit vom Typ des Endgerätes eine Verbindung unterdrückt oder vermittelt wird. Als vorteilhaft hat es sich herausgestellt, wenn im Rahmen der Regel ein Identifizierungscode des Endgerätes mit einer Liste verglichen wird. Insbesondere können auf der Liste jene Identifikationscodes von Endgeräten hinterlegt sein, denen eine Verbindung mit dem Mobilfunknetz ermöglicht werden soll. Versucht das Endgerät die Verbindung aufzubauen, wird der Identifizierungscode von dem Endgerät an die Prüfungseinheit übermittelt. Diese untersucht, ob der Identifizierungscode auf der Liste aufgeführt ist. Ist dieses der Fall, wird erfindungsgemäß eine Verbindung des Endgerätes mit dem Mobilfunknetz ermöglicht.

Alternativ ist denkbar, dass für Endgeräte, deren Identifikationscode auf der Liste aufgeführt ist, eine Verbindung mit dem Mobilfunknetz unterdrückt wird.

Vorteilhafterweise wird der Identifizierungscode von dem Betreiber des Mobilfunknetzes an das Endgerät vergeben. Damit der Identifizierungscode unzweideutig mit dem Endgerät verbunden ist, hat es sich als vorteilhaft erwiesen, wenn der Identifizierungscode eine IMSI (International Mobile Subscriber Identity) ist. Bei der IMSI handelt hat es sich um eine Internationale Mobilfunkteilnehmernummer, die netzintern vergeben und auf einer SIM-Karte eines Endgerätes vermerkt ist. Die IMSI dient zur Identifikation des Endgerätes bei der Vermittlung und Signalisierung eines Anrufes. Alternativ ist es auch möglich, dass der Identifizierungscode eine MSISDN (Mobile Subscriber Integrated Service Digital Networknumber) aufweist. Die MSISDN wird von dem Mobilfunknetzbetreiber dem Endgerät und/oder einem Benutzer des Endgerätes zugewiesen. Unter der MSISDN ist es einem Dritten möglich, über das Mobilfunknetz Kontakt mit dem Endgerät aufzunehmen. Da auch diese Information im Rahmen des Verbindungsaufbaus von dem Endgerät an das Mobilfunknetz übermittelt wird, ist es der Prüfungseinheit möglich, die IMSI oder die MSISDN mit den Voreinträgen auf der Liste zu vergleichen und entsprechend den Verbindungsaufbau zu ermöglichen oder zu unterdrücken.

Vorteilhafterweise wird im Rahmen des erfindungsgemäßen Verfahrens die Position des Endgerätes nach wenigstens einem der folgenden Verfahren bestimmt: Bestimmung der Cell-ID, Location Area Code (LOC), Timing Advance (TA), U-TDOA (Uplink Time Difference Of Arrival), Netzunterstützes GPS, OTDOA (Observed Time-Difference-of-Arrival), OTDOA-IPDL (Observed Time Difference of Arrival-Idle Period Downlink) oder OTDOA-Software Blanking. Bei dem Cell ID Verfahren wird die Bestimmung der Position mittels einer Identifikationsnummer der aktuell zur Versorgung des Endgerätes genutzten Funkzelle verwendet. Dieses Verfahren wird häufig von Netzbetreibern für Location Based Services verwendet, da es ohne Investitionen in die Infrastruktur und mit jedem verfügbaren Mobilfunkgerät genutzt werden kann. Außerdem liegt dem Netzbetreiber die erforderliche Position einer jeden Basisstation vor. Da der maximale Radius einer Funkzelle um eine Basisstation ca. 35 km beträgt, kann die Position auf ca. 70 km genau bestimmt werden. In Ballungsräumen mit hoher Basisstationsdichte lässt sich die Genauigkeit auf einige 100 m erhöhen. Dieses Verfahren lässt sich auch vom Mobilgerät ohne Unterstützung des Netzes nutzen, da viele Endgeräte es erlauben, die Cell-ID der momentan benutzten Basisstation auszulesen.

Das GSM Mobilfunksystem arbeitet mit einem TDMA (Time Division Multiple Access) System mit einer Zeitschlitzlänge von 0,577 ms. Da das System synchron arbeiten muss, werden die mobilen Endgeräte mit der BTS synchronisiert. Deshalb wird ein Timing Advance (TA) Wert von der BTS übermittelt, mit der das Endgerät Laufzeitverzögerungen aufgrund der Distanz zwischen Basisstation und mobilem Endgerät kompensieren kann. Der maximale Wert dieser TA kann 233 µs betragen, eingeteilt in 63 Stufen, was einer 6 Bit Auflösung entspricht. Damit betragen die Intervalle der TA 233 µs / 63 = 3,7 µs. Unter der Annahme, das die Lichtgeschwindigkeit c = 300.000 km/s beträgt, ist die Distanz per Bit des TA Wertes etwa 550 m. Damit lässt sich die Flächendeckung einer GSM-Funkzelle in 550 m breite Ringe rund um die Basisstation einteilen.

Das GSM Mobilfunksystem bietet als weitere Form der Lokalisierung das U-TDOA (Uplink Time Difference Of Arrival) an, welches in 3GPP TS 43.059 erwähnt wird. Bei diesem Verfahren werden die Ankunftszeiten von bekannten Signalen des Endgerätes von speziellen Einheiten (Location Measurement Unit, LMUs) im Netz gemessen. Anhand der Zeitunterschiede sowie der bekannten geographischen Position der LMUs kann dann die Position des Endgerätes bestimmt werden. Die Signale sind die von einem mobilen Endgerät bei einem asynchronen Handover (=Funkzellenwechsel) ausgesendeten Access Bursts, die von mehreren Messeinheiten, deren Position bekannt sein muss, empfangen werden. Damit lässt sich eine Genauigkeit von 50-200 m erreichen.

Im Rahmen einer weiteren vorteilhaften Ausführungsvariante wird die Position des Endgerätes durch eine Messung wenigstens einer Netzwerkgröße (auch Netzparameter oder -messwert) bestimmt. Vorteilhafterweise handelt es sich bei der Netzwerkgröße um eine Feldstärke und/oder eine Signalstärke und/oder eine Laufzeit. Mittels der so bestimmten Netzwerkgröße kann die Position des Endgerätes innerhalb des Gebietes bestimmt werden. Dabei hat es sich als besonders vorteilhaft erwiesen, wenn nicht nur eine einzelne Netzwerkgröße, sondern eine Mehrzahl von Netzwerkgrößen bestimmt werden. Insbesondere kann durch das Endgerät eine Netzwerkgröße für all jene Basisstationen bestimmt werden, die von dem Endgerät empfangen werden. So kann das Endgerät z. B. die Feldstärke der von allen empfangbaren Basisstationen emittierten Signale bestimmen und an das Netzwerk zurücksenden. Zur Implementierung kann im Rahmen des erfindungsgemäßen Verfahrens die bei Mobilfunknetzen durchgeführte Messung von Netzwerkgrößen genutzt werden. Im Rahmen eines GSM-Netzwerkes wird von dem Endgerät kontinuierlich ein Measurement Report an die Basisstationen übersandt. Dieser Measurement Report beinhaltet neben Messungen zur Signalqualität der aktuell genutzten Zelle bzw. Basisstation auch die Feldstärke der sechs Nachbarzellen. Die Measurement Reports werden alle 480 ms an das Netzwerk über einen speziell dafür genutzten Kanal übermittelt. Ein besonderer Vorteil der Nutzung des Measurement Reports im GSM-Netzwerk liegt darin, dass bei einem Versuch einer Unterbindung der Übersendung des Measurement Reports ein sofortiger Abbruch der Verbindung erfolgt. Dieses geschieht, da das GSM-Radio Resource Management einen unkorrekt empfangenen Measurement Report innerhalb eines SACCH (Slow Associated Control Channel) als Kriterium für einen Abbruch der Funkverbindung verwendet. Mit den Informationen über die Netzwerkgrößen, kann die Prüfungseinheit die Position des Endgerätes bestimmen.

In einer weiteren vorteilhaften Ausführungsvariante werden zur Bestimmung der Position des Endgerätes innerhalb des zweiten Positionsgebietes Ausbreitungseffekte, welche Netzwerkgrößen an der aktuellen Position eines Endgerätes beeinflussen, zur Ortsbestimmung genutzt. Wenn ein Endgerät mehrere Basisstationen empfängt, bildet sich für die vermessene Netzwerkgröße ein charakteristischer Signalvektor heraus. Dieser charakteristische Signalvektor kann mit Messungen und/oder Simulationen der Ausbreitungssituation der Netzwerkgröße verglichen werden. Ausgangspunkt dieser Vorgehensweise ist, dass innerhalb des zweiten Positionsgebietes an einer Mehrzahl von Orten mindestens eine Netzwerkgröße für eine Mehrzahl von Basisstationen vermessen wird. Dadurch entsteht ein Gitter von Messpunkten an denen eine Netzwerkgröße für eine Mehrzahl von Basisstationen vermessen wurde. Jeder der sich so ergebende Tupel an Werten für die vermessene Netzwerkgröße ist eindeutig mit einem Ort innerhalb des zweiten Positionsgebietes verbunden. Die vermessenen Netzwerkgrößen können im Anschluss in Abhängigkeit vom Ort in einer Tabelle hinterlegt werden. Erfindungsgemäß ist es nun vorgesehen, dass das Endgerät für eine Mehrzahl von Basisstationen mindestens eine Netzwerkgröße misst und den so bestimmten Signalvektor an das Mobilfunknetz und/oder die Prüfungseinheit übermittelt. Dort kann dann ein Vergleich der vermessenen Netzwerkgröße mit den Signalvektoren stattfinden, um daraus Rückschlüsse auf die Position des Endgerätes zu ziehen.

Da insbesondere in GSM-Netzwerken im Rahmen des Measurement Reports die Signalstärken der Basisstationen gemessen und an das Netzwerk übermittelt werden, können diese Informationen genutzt werden, um die Position des Endgerätes zu bestimmen. Es bedürfte in diesem Fall nur noch einer Vermessung bzw. Simulation der zu erwartenden Signalstärke innerhalb des zweiten Positionsgebietes. Durch eine Kombination der Messung realer Daten mit einem Modell des zweiten Positionsgebietes lässt sich die Position eine Endgerätes mit einer Fehlertoleranz zwischen 50 und 250 m bestimmen.

In einer vorteilhaften Ausgestaltung kann die Messung der Netzwerkgröße durch das Endgerät nach Ablauf einer Zeitspanne durchgeführt wird. Dabei haben sich Zeitspannen zwischen 0.1 s und 2 s als besonders nützlich erwiesen. Weiterhin hat es sich als bevorzugt herausgestellt, wenn die Messung der Netzwerkgröße durch die Prüfungseinheit ausgelöst werden kann. Dadurch ist sichergestellt, dass in jedem Fall, in dem ein Endgerät mit dem Mobilfunknetz kommunizieren möchte und sich innerhalb des zweiten Positionsgebietes befindet, die Prüfungseinheit für die Bestimmung der Position jederzeit den benötigten Signalvektor abfragen kann. Als besonders bevorzugt hat es sich herausgestellt, wenn der Befehl, der von der Prüfungseinheit an das Endgerät übersandt wird, Teil eines SIM Werkzeugsatzes (SIM Application Toolkits, SAT) ist. Der SAT ist eine herstellerübergreifende Schnittstelle zwischen dem Endgerät und einer SIM-Karte und ermöglicht einer Serverseite, wie z. B. Netzwerkbetreiber oder Provider, mobile Endgeräte bzw. deren SIM-Karte durch in SMS (Short Message Service) Nachrichten eingebettete Java Applikationen zu personalisieren und um zusätzliche Features zu erweitern. Zugleich kann auch die SIM-Karte mit dem Server via SMS kommunizieren.

In dem erfindungsgemäßen Verfahren wird genutzt, dass sowohl bei GSM als auch bei UMTS die Endgeräte kontinuierlich Measurement Reports versenden, welche eine Bestandsaufnahme der empfangbaren Zellen inklusive deren Feldstärken enthalten. Hierzu ist es nicht erforderlich, dass sich das Endgerät aktiv in der Funkzelle, welche das zu unterdrückende Gebiet markiert, aufhält. Es genügt die Sicherstellung der Empfangbarkeit der Funkzelle. Um einen Übergang von außerhalb in das Gebiet zu erkennen, kann letzteres eine eigene Location bzw. Routing Area bilden. Damit wird sichergestellt, dass bei dem Wechsel zwingend ein Measurement Report zum Mobilfunknetz gesendet wird. Somit bietet sich das jeweilige Interface zwischen Zugangsnetz und Kernnetz als Initiator für eine Lokalisierung an. Eine aktualisierte Information wird dem Kernnetz zuverlässig bei Wechsel einer Location Area bzw. Routing Area signalisiert. Um den Aufwand zur genaueren Lokalisierung zu minimieren, ist es von Vorteil, die Location Areas bzw. die Routing Areas hierarchisch um das Gebiet, wie z. B. eine JVA zu gruppieren. Eine genauere Auswertung des Ortes muss erfindungsgemäß nur im Bereich des "unklaren" zweiten Positionsgebiets durchgeführt werden. Je kleiner die örtliche Ausdehnung des "unklaren" zweiten Positionsgebietes gewählt werden kann, desto geringer ist der Aufwand zur Verarbeitung der Lokalisierungsdaten bei gleichmäßiger Teilnehmerdichte/Fläche.

Weiterhin kann das Verfahren in einer CAMEL-Struktur (Customized Applications for Mobile network Enhanced Logic) integriert sein. Die CAMEL-Struktur ermöglicht die Definition von Diensten, welche über die bestehenden standardisierten Dienste von GSM und UMTS hinausgehen. Eine Call-Admission-Control kann, basierend auf den Informationen der markierten Funkzelle, unerwünschten Mobilfunkverkehr unterdrücken bzw. erwünschten Mobilfunkverkehr passieren lassen. Dieses kann durch eine CAMEL Struktur erfolgen, die einen Eingriff in das Call Handling (circuit switched und packet switched) und die Behandlung von SMS erlaubt. Durch geschicktes Einstellen von Systemparametern, wie Zellgröße, Häufigkeit von Location Updates und Measurement Reports sowie einer gedächtnisbasierten Plausibilitätskontrolle kann die Leistungsfähigkeit des Verfahrens optimiert werden.

Außerdem hat es sich als vorteilhaft herausgestellt, wenn das erfindungsgemäße Verfahren in einem Mobilfunknetz ausgeführt wird, welches nach wenigstens einem der folgenden Standards betrieben wird: 4G, UMTS (Universal Mobile Telecommunications System) und/oder GSM (Global System for Mobile Communications).

Eine weitere vorteilhafte Ausführungsvariante des erfindungsgemäßen Verfahrens sieht vor, dass das Verfahren die folgenden Schritte umfasst:
o das Endgerät vermisst die Feldstärke wenigstens einer der ersten, der zweiten oder der dritten Basisstation an der Position des Endgeräts,
o das Endgerät baut die Verbindung mit einer ausgewählten Basisstation auf, wobei die ausgewählte Basisstation jene der ersten, der zweiten oder der dritten Basisstation ist, die die größte Feldstärke aufweist.

Im Rahmen der beschriebenen Ausführungsvariante ist es vorteilhafterweise möglich, dass die erste Basisstation die höchste Feldstärke für ein Endgerät innerhalb des ersten und/oder des zweiten Positionsgebietes erzeugt, so dass das Endgerät die Verbindung zu der ersten Basisstation aufbaut.

Eine weitere vorteilhafte Ausführungsvariante des erfindungsgemäßen Verfahrens sieht vor, dass eine Rechnereinheit innerhalb der ersten oder der zweiten oder der dritten Basisstation entscheidet, ob die vom Endgerät aufgebaute Kommunikationsverbindung bestehen bleibt. Die Rechnereinheit ergänzt bzw. führt Weisungen der Prüfungseinheit aus.

Die erfindungsgemäße Aufgabe wird ebenfalls gelöst durch eine Prüfungseinheit zur Unterdrückung einer Nutzung eines Mobilfunknetzes in einem Gebiet, wobei die Prüfungseinheit ein Kommunikationsmittel und ein Auswertemittel aufweist, mittels des Kommunikationsmittels eine Verbindung mit einem Endgerät aufbaubar ist, mittels des Auswertemittels einen Aufenthalt des Endgeräts in einem ersten, zweiten oder dritten Positionsgebiet derart bestimmbar ist, dass
- die Prüfungseinheit eine Verbindung mit dem Mobilfunknetz für ein Endgerät innerhalb des ersten Positionsgebiets in Abhängigkeit von wenigstens einer Regel unterdrückt, wobei zumindest ein Teil des Gebiets von dem ersten Positionsgebiet überdeckt ist,
- für ein Endgerät innerhalb des zweiten Positionsgebiets eine Position bestimmbar ist, mittels der Prüfungseinheit eine Verbindung des Endgeräts bei einer Position innerhalb des Gebiets unterdrückbar ist und mittels der Prüfungseinheit eine Verbindung des Endgeräts bei einer Position außerhalb des Gebiets durchführbar ist, wobei das zweite Positionsgebiet zumindest bereichsweise an das erste Positionsgebiet grenzt,
- mittels der Prüfungseinheit eine Verbindung eines Endgeräts innerhalb des dritten Positionsgebiets durchführbar ist, wobei das dritte Positionsgebiet zumindest bereichsweise an das zweite Positionsgebiet grenzt.

Merkmale und Details, die dabei im Zusammenhang mit dem erfindungsgemäßen Verfahren beschrieben wurden, gelten selbstverständlich auch für die erfindungsgemäße Prüfungseinheit.

Als besonders vorteilhaft hat es sich herausgestellt, die erfindungsgemäße Prüfungseinheit nach einem der oben beschriebenen Verfahren zu betreiben.

Weitere Vorteile, Merkmale oder Einzelheiten der Erfindung sind in der nachfolgenden Beschreibung, in der unter Bezugnahme auf die Zeichnungen Ausführungsbeispiele der Erfindung im Einzelnen erläutert werden, beschrieben. Dabei können die in den Ansprüchen und in der Beschreibung erwähnten Merkmale jeweils einzeln für sich oder in beliebiger Kombination erfindungswesentlich sein. Es zeigen:
- Figur 1: ein Gebiet, innerhalb dessen das erfindungsgemäße Verfahren zur Unterdrückung einer Nutzung eines Mobilfunknetzes genutzt wird,
- Figur 2: ein Flussdiagramm zur Darstellung des erfindungsgemäßen Verfahrens und
- Figur 3: eine Ausschnittsvergrößerung aus Figur 1 zur Verdeutlichung einer Positionsbestimmung im Rahmen des erfindungsgemäßen Verfahrens.

Das Ziel des erfindungsgemäßen Verfahrens besteht darin, die Nutzung der Dienstleistungen eines Mobilfunknetzes 10 in einem Gebiet 15 zu verhindern. Diese Art Verfahren kann beispielsweise für die Unterdrückung von unerwünschtem Mobilfunkverkehr innerhalb von Justizvollzugsanstalten genutzt werden. So soll eine Kommunikation der Insassen der JVA mit der Außenwelt verhindert werden, um sicherzustellen, dass keine ungesetzlichen Aktivitäten aus der JVA gesteuert werden können.

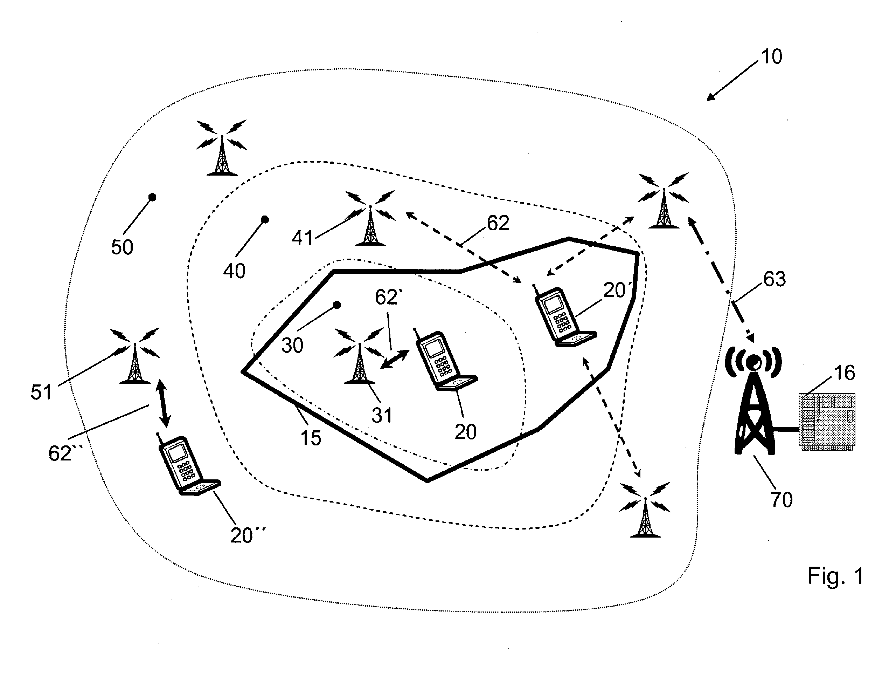

Im Rahmen des erfindungsgemäßen Verfahrens soll eine Kommunikation eines Endgerätes 20 mit einem Mobilfunknetz in einem Gebiet 15 unterdrückt werden. Dazu ist eine erfindungsgemäße Prüfungseinheit 16 vorgesehen, welche in dem Mobilfunknetz 10 integriert ist. Je nach Anwendungszweck hat es sich als vorteilhaft erwiesen, die Prüfungseinheit 16 in einem Kernnetz oder einem Zugangsnetz des Mobilfunknetzes 10 zu integrieren. In Figur 1 ist dargestellt, dass die Prüfungseinheit 16 an eine Feststationssteuerung 70 - im Folgenden auch BSC - angeschlossen ist. Diese BSC 70 verwaltet eine Mehrzahl von Basisstationen, welche eine Vielzahl von Positionsgebieten 30,40,50 aufspannen. Dabei beinhaltet die Funktion der BSC 70 eine Reservierung von Funkfrequenzen, eine Verbindungsübergabe zwischen einzelnen Basisstationen, sowie den Verbindungsaufbau zu einem Festnetz des Mobilfunknetzes 10. Versucht nun ein Nutzer eines Endgerätes 20 eine Kommunikationsverbindung 62' zu dem Mobilfunknetz 10 aufzubauen, werden dazu Kommunikationsmittel der BSC 70 genutzt. Ein in der BSC 70 integriertes Aufenthaltsmittel prüft ob sich das Endgerät 20 in einem ersten 30, zweiten 40 oder dritten Positionsgebiet 50 aufhält. Wie der Figur 1 zu entnehmen ist, überdeckt das erste Positionsgebiet 30 zumindest einen Teil des Gebiets 15, in dem eine Nutzung des Mobilfunknetzes 10 unterdrückt werden soll. Jenes erste Positionsgebiet 30 wird dabei von einer ersten Basisstation 31 aufgespannt. Über eine Luftschnittstelle ist eine Verbindung 62' zwischen dem Endgerät 20 und der ersten Basisstation 31 aufbaubar. Dabei stimmt die geometrische Größe des ersten Positionsgebietes 30 nicht mit jenem des zu überwachenden Gebietes 15 überein. Vielmehr existieren Randbereiche in denen eine Kommunikation eines Endgerätes 20 mit dem Mobilfunknetz 10 nicht über die erste Basisstation 31 abgewickelt wird. Dieser Bereich wird von dem zweiten Positionsgebiet 40 überdeckt. Ein Endgerät 20', welches sich in diesem zweiten Positionsgebiet 40 befindet, kann mit einer zweiten Basisstation 41 eine Verbindung 62 aufbauen. Die zweite Basisstation 41 spannt dabei das zweite Positionsgebiet 40 auf, welches im dargestellten Ausführungsbeispiel das erste Positionsgebiet 30 umgibt. Jenes zweite Positionsgebiet 40 grenzt an ein drittes Positionsgebiet 50 an. Ein Endgerät 20" baut hier eine Verbindung mit einer dritten Basisstation 51 auf. Je nach Größe des dritten Positionsgebietes 50 kann dieses von einer Mehrzahl von dritten Basisstationen 51 - in Figur 1 vier Stück - aufgespannt werden. Alle Basisstationen 31, 41, 51 werden über die BCS 70 kontrolliert und sind darüber mit der Prüfungseinheit 16 verbunden.

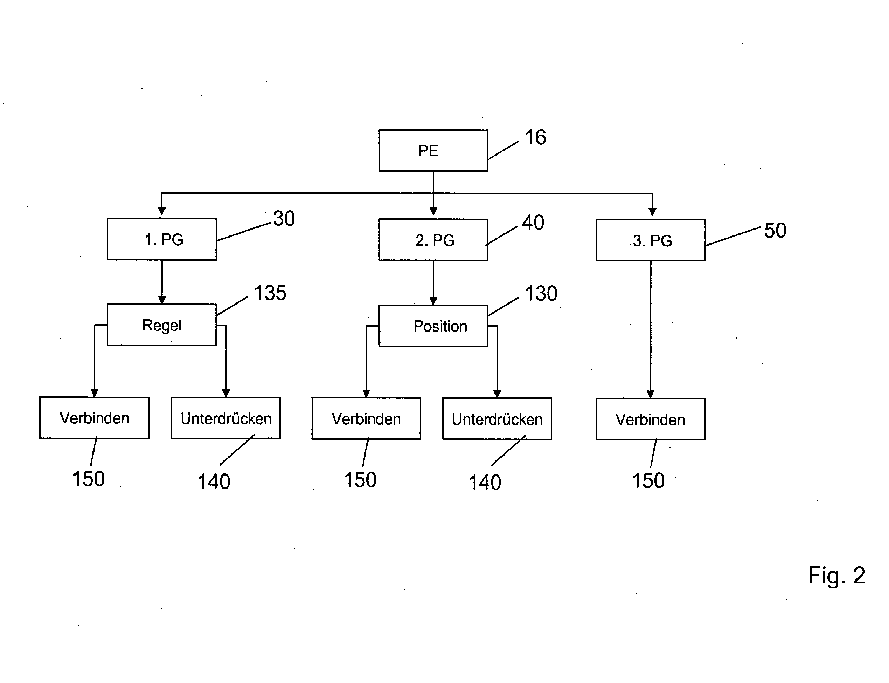

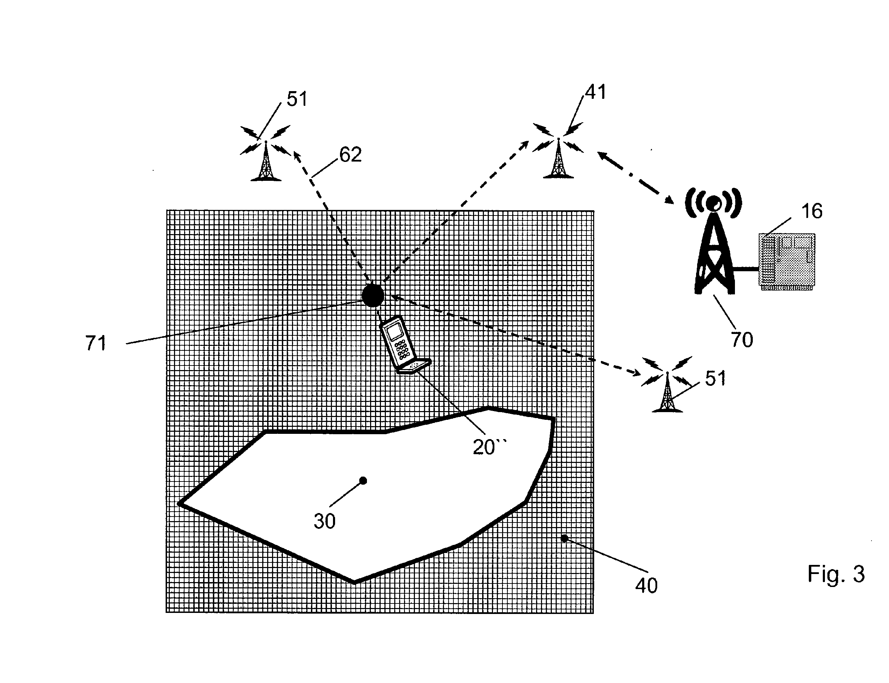

Die einzelnen Verfahrensschritte des erfindungsgemäßen Verfahrens sollen mit Hilfe des in Figur 2 gezeigten Flussdiagramms verdeutlicht werden. Erhält die Prüfungseinheit 16 die Information, dass das Endgerät 20 innerhalb des ersten Positionsgebietes 30 versucht eine Verbindung 62' mit dem Mobilfunknetz 10 aufzubauen, so wird diese Verbindung 62' in Abhängigkeit von wenigstens einer Regel 135 unterdrückt. Normalerweise könnte jede Verbindung eines Endgerätes 20, welches sich innerhalb des Gebietes 15 befindet, automatisch unterdrückt werden. Bei dem Beispiel, dass es sich bei dem Gebiet 15 um eine Justizvollzugsanstalt handelt, kann es aber gegeben sein, dass etwa Wärter weiterhin das Endgerät 20 für eine Kommunikation mit dem Mobilfunknetz 10 nutzen können sollen. Um dieses zu ermöglichen, wird erfindungsgemäß die Regel 135 eingeführt. Im Rahmen der Regel 135 kann ein Identifizierungscode des Endgerätes 20, 20' mit einer Liste verglichen und so eine Verbindung 62 des Endgerätes 20, 20' mit dem Mobilfunknetz 10 ermöglicht werden. Als vorteilhaft hat es sich herausgestellt, wenn dieser Identifizierungscode eine IMSI und/oder eine MSISDN aufweist. Dieses Nummern können im Vorhinein in die Liste eingetragen werden, so dass es etwa einem Vollzugsbeamten jederzeit möglich ist, auch von innerhalb der JVA eine Kommunikation mit dem Mobilfunknetz 10 aufzubauen. Dementsprechend zeigt das Flussdiagramm der Figur 3 die Möglichkeit, dass eine Verbindung zu dem Mobilfunknetz 10 in Abhängigkeit von der Regel 135 entweder unterdrückt 140 oder ermöglicht 150 wird.

Registriert die Prüfungseinheit hingegen, dass sich das Endgerät 20" in dem dritten Positionsgebiet 50 aufhält, so wird automatisch das Endgerät 20 auf Wunsch des Benutzers mit dem Mobilfunknetz 10 verbunden 150. Folglich ist es einer Person, die sich außerhalb des Gebietes 15 aufhält, jederzeit möglich, mit dem Mobilfunknetz 10 eine Verbindung 62" aufzubauen.

Da die geometrische Anpassung der Größe des ersten Positionsgebietes 30 an die geometrische Form und Größe des Gebietes 15 nur mit sehr großem Aufwand möglich ist und insbesondere in den Randbereichen des ersten Positionsgebietes 30 eine Bestimmung der Lage des Endgerätes 20 nur sehr schwierig möglich ist, reicht es nicht aus, ausschließlich jene Verbindungen zu unterdrücken, welche mit der ersten Basisstation 31 aufgebaut werden. Erfindungsgemäß ist es deshalb vorgesehen, dass das zweite Positionsgebiet 40 zumindest bereichsweise das erste Positionsgebiet 30 begrenzt. Wie der Figur 1 zu entnehmen ist, ist das zweite Positionsgebiet 40 hauptsächlich in den Randbereichen des Gebietes 15 angeordnet. Es sind folglich jene Teile des Gebietes 15 in denen auch nur eine kleine Positionsänderung ausreicht, um entweder innerhalb oder außerhalb des Gebietes 15 zu sein. Als Beispiel ist etwa ein Bürgersteig zu nennen, welcher entlang einer JVA geführt wird. Ein Benutzer der auf diesem Bürgersteig entlang läuft, möchte ungehindert mit dem Mobilfunknetz 10 kommunizieren. Gleichzeitig muss aber sichergestellt werden, dass eine Insasse der JVA, der nur wenige Meter entfernt hinter der Mauer ist, nicht mit dem Mobilfunknetz 10 eine Verbindung 62' aufbauen kann. Dieses wird erfindungsgemäß durch das Zusammenwirken der Prüfungseinheit 16 sowie dem zweiten Positionsgebiet 40 sichergestellt. Die erfindungsgemäße Prüfungseinheit 16 unterdrückt 140 eine Verbindung des Endgerätes 20', wenn dieses eine Position innerhalb des Gebietes 15 aufweist. Im Gegensatz dazu ermöglicht die Prüfungseinheit 16 eine Verbindung 62 des Endgeräts 20' bei einer Position außerhalb des Gebietes 15. Im Rahmen des erfindungsgemäßen Verfahrens muss also die exakte Position des Endgerätes 20, 20' nur in jenen Fällen bestimmt werden, in denen sich dieses innerhalb des zweiten Positionsgebietes 40 befindet. Sowohl beim ersten 30 als auch beim dritten Positionsgebiet 50 reicht es vollkommen aus, wenn die Prüfungseinheit 16 die Information erhält, dass das Endgerät 20, 20" in diesen Positionsgebieten 30, 50 ist. Es bedarf keinerlei Informationen wo innerhalb des ersten 30 bzw. des dritten Positionsgebietes 50 das Endgerät 20, 20" genau lokalisiert ist. Dadurch, dass eine Positionsbestimmung 130 nur für solche Endgeräte 20' von Nöten ist, welche sich innerhalb des zweiten Positionsgebietes 40 aufhalten, wird die Anforderung an die Prüfungseinheit 16 bzw. etwaige Auswertemittel, die den Aufenthalt des Endgerätes bestimmen, stark reduziert.

Um die Position des Endgerätes 20, 20', 20" zu bestimmen, bieten sich eine Vielzahl von Möglichkeiten an. Als besonders vorteilhaft hat sich der in Figur 3 dargestellte Vergleich von Signalvektoren des Endgerätes 20" mit im Vorhinein vermessenen Netzwerkgrößen 71 herausgestellt. Zum besseren Verständnis sind in Figur 3 nur das erste Positionsgebiet 30 sowie das zweite Positionsgebiet 40 dargestellt. Das Endgerät 20" weist in dem dargestellten Ausführungsbeispiel eine Lage innerhalb des zweiten Positionsgebietes 40 auf. Folglich muss im Rahmen des erfindungsgemäßen Verfahrens die exakte Position bestimmt werden. Um dieses zu ermöglichen, misst das Endgerät 20" wenigstens eine Netzwerkgröße 71 und übermittelt diese Netzwerkgröße 71 an die Prüfungseinheit 16 bzw. das Mobilfunknetz 10. Aus der gemessenen Netzwerkgröße 71 bestimmt dann das Mobilfunknetz 10 bzw. die Prüfungseinheit 16 die Position des Endgerätes 20 innerhalb des zweiten Positionsgebietes 40.

In GSM-Mobilfunknetzen bestimmt das Endgerät 20" zur Messung der Signalqualität die Feldstärke einer Mehrzahl von erreichbaren Basisstationen. Dadurch kann das Endgerät 20 ermitteln, ob es eine Verbindung 62 mit der jeweils stärksten Basisstation 41 aufgebaut hat. Die Information über die Netzwerkgröße 71 - also die Feldstärke - wird im Rahmen eines Measurement Reports (MR) an das Mobilfunknetz 10 bzw. die Prüfungseinheit 16 übersandt. Dieser Signalstärkevektor ist charakteristisch für den Standort des mobilen Endgerätes 20". Um die Genauigkeit der Positionsbestimmung weiter zu erhöhen, kann im Vorhinein eine Messung und/oder eine Simulation des zweiten Positionsgebietes 40 stattfinden. Im Rahmen der Messung wird dabei entlang eines Koordinatengitters die Netzwerkgröße 71 für eine Vielzahl von Basisstationen 41 vermessen. Die so ermittelten Werte der Netzwerkgröße 71 können dann mit den jeweils zugeordneten Orten in dem zweiten Positionsgebiet 40 in einer Tabelle hinterlegt werden. Wird von der Prüfungseinheit 16 nun ein MR empfangen, kann der Signalstärkevektor ausgelesen und mit der im Vorhinein gemessenen Netzwerkgröße 71 verglichen werden. Dadurch ist eine sehr präzise Bestimmung der aktuellen Position des mobilen Endgerätes 20" innerhalb des zweiten Positionsgebietes 40 möglich.

Die Nutzung des MR für die Bestimmung der Position ist auch in sofern vorteilhaft, als dass der Versuch einer Unterbindung der Übersendung des Measurement Reports in GSM-Netzen zu einem sofortigen Abbruch der Verbindung führt. Somit könnte auch der Versuch die Positionsbestimmung durch die Prüfungseinheit 16 zu erschweren nicht zu einer Überwindung der Unterdrückung des Verbindungsaufbaus im Rahmen des erfindungsgemäßen Verfahrens führen.

### Bezugszeichenliste

- 10: Mobilfunknetz
- 15: Gebiet
- 16: Prüfungseinheit
- 20,20',20": Endgerät
- 30: erstes Positionsgebiet
- 31: erste Basisstation
- 40: zweites Positionsgebiet
- 41: zweite Basisstation
- 50: drittes Positionsgebiet
- 51: dritte Basisstation
- 62,62',62": Verbindung
- 70: Feststationssteuerung (BNC/RNC)
- 71: Netzwerkgröße
- 130: Positionsbestimmung
- 135: Regelüberprüfung
- 140: Unterdrückung der Kommunikationsverbindung
- 150: Aufbau der Kommunikationsverbindung

## Patentansprüche

1. Verfahren zur Unterdrückung einer Nutzung eines Mobilfunknetzes (10) in einem Gebiet (15), wobei
eine Prüfungseinheit (16) registriert, in welchem von drei Positionsgebieten (30, 40, 50) sich ein Endgerät (20,20',20") aufhält, wobei
zumindest ein Teil des Gebiets (15) von einem ersten Positionsgebiet (30) überdeckt wird,
die Prüfungseinheit (16) eine Verbindung (62,62',62") mit dem Mobilfunknetz (10), wenn sich das Endgerät (20,20',20") innerhalb des ersten Positionsgebiets (30) befindet, in Abhängigkeit von wenigstens einer Regel unterdrückt,
ein zweites Positionsgebiet (40) zumindest bereichsweise an das erste Positionsgebiet (30) grenzt,
für ein Endgerät (20,20',20"), das sich innerhalb des zweiten Positionsgebiets (40) befindet, die exakte geographische Position bestimmt wird,
die Prüfungseinheit (16) eine Verbindung (62,62',62") des Endgeräts (20,20',20") bei einer exakten geographischen Position des Endgeräts (20,20',20") innerhalb des Gebiets (15) unterdrückt und
die Prüfungseinheit (16) eine Verbindung (62,62',62") des Endgeräts (20,20',20") bei einer exakten geographischen Position des Endgeräts (20,20',20") außerhalb des Gebiets (15) ermöglicht,
ein drittes Positionsgebiet (50) zumindest bereichsweise an das zweite Positionsgebiet (40) grenzt, und
die Prüfungseinheit (16) eine Verbindung (62,62',62") eines Endgeräts (20,20',20") innerhalb des dritten Positionsgebiets (50) ermöglicht,
wobei das erste Positionsgebiet (30) von einer Funkzelle zumindest einer ersten Basisstation (31), das zweite Positionsgebiet (40) von einer Funkzelle zumindest einer zweiten Basisstation (41) und das dritte Positionsgebiet (50) von einer Funkzelle zumindest einer dritten Basisstation (51) aufgespannt werden,
und wobei nur die zumindest eine zweite Basisstation (41) eine genaue Positionsbestimmung des Endgerätes (20,20',20") vornehmen muss.

2. Verfahren nach Anspruch 1,
**dadurch gekennzeichnet,**
**dass** die erste (31) und/oder die zweite (41) und/oder die dritte Basisstation (51) eine der Folgenden ist: eine BTS (Base Transceiver Station) oder ein Node-B.

3. Verfahren nach Anspruch 1 oder 2,
**dadurch gekennzeichnet,**
**dass** die Prüfungseinheit (16) in einem Kernnetz (70) des Mobilfunknetzes (10) integriert ist, insbesondere dass die Prüfungseinheit (16) in einem BSC (Base Station Controller) oder RNC (Radio Network Controller) des Mobilfunknetzes (10) integriert ist, vorzugsweise dass wenigstens die erste (31) und/oder die zweite (41) und/oder die dritte Basisstation (51) an das BSC und/oder das RNC angeschlossen sind, besonders bevorzugt dass die erste (31) und die zweite (41) und die dritte Basisstation (51) an die BSC oder die RNC angeschlossen sind.

4. Verfahren nach einem der vorhergehenden Ansprüche,
**dadurch gekennzeichnet,**
**dass** vor dem Aufbau der Verbindung (62,62',62") das Endgerät (20,20',20") einen Signalisierungskanal abhört, insbesondere dass die erste (31) und/oder die zweite (41) und/oder die dritte Basisstation (51) auf dem Signalisierungskanal senden.

5. Verfahren nach Anspruch 4,
**dadurch gekennzeichnet,**
**dass** die erste (31) und/oder die zweite (41) und/oder die dritte Basisstation (51) auf dem Signalisierungskanal netzwerkspezifische Parameter senden, bevorzugt dass der Signalisierungskanal ein Broadcast Control Channel (BCCH) ist.

6. Verfahren nach einem der vorhergehenden Ansprüche,
**dadurch gekennzeichnet,**
**dass** im Rahmen der Regel ein Identifizierungscode des Endgeräts (20,20',20") mit einer Liste verglichen wird, insbesondere dass bei einem auf der Liste hinterlegten Identifizierungscode die Verbindung (62,62',62") mit dem Mobilfunknetz (10) ermöglicht wird und/oder insbesondere der Identifizierungscode eine IMSI (International Mobile Subscriber Identity) und/oder eine MSISDN (Mobile Subscriber Integrated Services Digital Network Number) aufweist.

7. Verfahren nach einem der vorhergehenden Ansprüche,
**dadurch gekennzeichnet,**
**dass** die Position des Endgeräts (20,20',20") nach wenigstens einem der folgenden Verfahren bestimmt wird: Bestimmung der Cell-ID, Location Area Code (LOC), Timing Advance (TA), U-TDOA (Uplink Time Difference Of Arrival), Netzunterstützes GPS, OTDOA (Observed Time-Difference-of-Arrival), OTDOA-IPDL (Observed Time Difference of Arrival-Idle Period Downlink) oder OTDOA-Software Blanking.

8. Verfahren nach einem der vorhergehenden Ansprüche,
**dadurch gekennzeichnet,**
**dass** die Position des Endgeräts (20,20',20") durch eine Messung wenigstens einer Netzwerkgröße (71) bestimmt wird, insbesondere dass die Netzwerkgröße (71) eine Feldstärke und/oder eine Laufzeit ist und/oder insbesondere das Endgerät (20,20',20") die Netzwerkgröße (71) misst, das Endgerät (20,20',20") die Netzwerkgröße (71) an das Mobilfunknetz (10) übermittelt und
das Mobilfunknetz (10) aus der Netzwerkgröße (71) die Position des Endgeräts (20,20',20") bestimmt, insbesondere dass die Position des Endgeräts (20,20',20") in der Prüfungseinheit bestimmt wird.

9. Verfahren nach Anspruch 8,
**dadurch gekennzeichnet,**
**dass** innerhalb des zweiten Positionsgebietes (40) an einer Mehrzahl von Orten mindestens eine der Netzwerkgrößen (71) für eine Mehrzahl von Basisstationen (31,41,51) vermessen werden, wobei insbesondere das Endgerät (20,20',20") für eine Mehrzahl von Basisstationen (31,41,51) jeweils mindestens eine Netzwerkgröße (71) misst, das Endgerät (20,20',20") die Netzwerkgrößen (71) an das Mobilfunknetz (10) und/oder an die Prüfungseinheit (16) übermittelt und die Netzwerkgrößen (71) mit den vermessenen Netzwerkgrößen (71) zur Ortsbestimmung verglichen werden.

10. Verfahren nach einem der Ansprüche 8 oder 9,
**dadurch gekennzeichnet,**
**dass** die Messung der Netzwerkgröße (71) durch das Endgerät (20,20',20") nach Ablauf einer Zeitspanne durchgeführt wird, besonders bevorzugt dass die Netzwerkgröße (71) im Rahmen eines Reportes, insbesondere eines Measurement Reports, an das Mobilfunknetz übermittelt wird.

11. Verfahren nach einem der Ansprüche 8 bis 10,
**dadurch gekennzeichnet,**
**dass** die Messung der Netzwerkgröße (71) durch die Prüfungseinheit (16) ausgelöst wird, besonders bevorzugt dass die Messung der Netzwerkgröße (71) durch einen Befehl der Prüfungseinheit (16) an das Endgerät (20,20',20") ausgelöst wird, insbesondere dass der Befehl Teil eines SIM-Werkzeugsatz (SIM Application Toolkit) ist.

12. Verfahren nach einem der vorhergehenden Ansprüche,
**dadurch gekennzeichnet,**
**dass** das Verfahren in einer CAMEL- Struktur (Customized Applications for Mobile network Enhanced Logic) integriert ist.

13. Verfahren nach einem der vorhergehenden Ansprüche,
**dadurch gekennzeichnet,**
**dass** das Mobilfunknetz (10) nach wenigstens einem der folgenden Standards betrieben wird: 4G, UMTS (Universal Mobile Telecommunications System) und/oder GSM (Global System for Mobile Communications).

14. Prüfungseinheit (16) zur Unterdrückung einer Nutzung eines Mobilfunknetzes (10) in einem Gebiet (15), wobei
die Prüfungseinheit (16) ein Kommunikationsmittel und ein Auswertemittel aufweist,
mittels des Kommunikationsmittels eine Verbindung (62,62',62") mit einem Endgerät (20,20',20") aufbaubar ist,
mittels des Auswertemittels einen Aufenthalt des Endgeräts (20,20',20") in einem ersten (30), zweiten (40) oder dritten Positionsgebiet (50) derart bestimmbar ist, dass
die Prüfungseinheit (16) registriert, in welchem von drei Positionsgebieten (30, 40, 50) sich ein Endgerät (20,20',20") aufhält, wobei
- die Prüfungseinheit (16) eine Verbindung (62,62',62") mit dem Mobilfunknetz (10), wenn sich das Endgerät (20,20',20") innerhalb des ersten Positionsgebiets (30) befindet, in Abhängigkeit von wenigstens einer Regel unterdrückt, wobei zumindest ein Teil des Gebiets (15) von dem ersten Positionsgebiet (30) überdeckt ist,
- für ein Endgerät (20,20',20"), das sich innerhalb des zweiten Positionsgebiets (40) befindet, eine exakte geographische Position bestimmbar ist, mittels der Prüfungseinheit (16) eine Verbindung (62,62',62") des Endgeräts (20,20',20") bei einer exakten geographischen Position des Endgeräts (20,20',20") innerhalb des Gebiets (15) unterdrückbar ist und mittels der Prüfungseinheit (16) eine Verbindung (62,62',62") des Endgeräts (20,20',20") bei einer exakten geographischen Position des Endgeräts (20,20',20") außerhalb des Gebiets (15) durchführbar ist, wobei das zweite Positionsgebiet (40) zumindest bereichsweise an das erste Positionsgebiet (30) grenzt,
- mittels der Prüfungseinheit (16) eine Verbindung (62,62',62") eines Endgeräts (20,20',20") innerhalb des dritten Positionsgebiets (50) durchführbar ist, wobei das dritte Positionsgebiet (50) zumindest bereichsweise an das zweite Positionsgebiet (40) grenzt
wobei das erste Positionsgebiet (30) von einer Funkzelle zumindest einer ersten Basisstation (31), das zweite Positionsgebiet (40) von einer Funkzelle zumindest einer zweiten Basisstation (41) und das dritte Positionsgebiet (50) von einer Funkzelle zumindest einer dritten Basisstation (51) aufgespannt werden,
und wobei nur die zumindest eine zweite Basisstation (41) eine genaue Positionsbestimmung des Endgerätes (20,20',20") vornehmen muss.

15. Prüfungseinheit (16) nach Anspruch 14, welche nach einem der Verfahren gemäß den Ansprüchen 1 bis 13 betreibbar ist.

## Claims

1. Method for suppressing the use of a mobile phone network (10) in an area (15), wherein
a testing unit (16) registers in which of three position areas (30, 40, 50) a terminal device (20, 20', 20") resides, wherein
at least part of the area (15) is covered by a first position area (30),
the testing unit (16) suppresses a connection (62, 62', 62") to the mobile phone network (10) when the terminal (20, 20', 20") is located within the first position area (30), depending on at least one rule,
a second position area (40) borders the first position area (30) at least in some areas,
the exact geographical position is determined for a terminal device (20, 20', 20") which is located within the second position area (40),
the testing unit (16) suppresses a connection (62, 62', 62") of the terminal device (20, 20', 20") if the exact geographical position of the terminal device (20, 20', 20") lies within the area (15) and
the testing unit (16) enables a connection (62, 62', 62") of the terminal device (20, 20', 20") if the exact geographical position of the terminal device (20, 20', 20") lies outside the area (15),
a third position area (50) borders the second position area (40) at least in some areas, and
the testing unit (16) enables a connection (62, 62', 62") of a terminal device (20, 20', 20") within the third position area (50),
wherein the first position area (30) is spanned by a radio cell of at least one first base station (31), the second position area (40) is spanned by a radio cell of at least one second base station (41) and the third position area (50) is spanned by a radio cell of at least one third base station (51),
and wherein only the at least one second base station (41) must make an exact position determination of the terminal device (20, 20', 20").

2. The method according to Claim 1,
**characterized in that**
the first (31) and/or the second (41) and/or the third base station (51) is one of the following: a BTS (Base Transceiver Station) or a node-B.

3. The method according to Claim 1 or 2,
**characterized in that**
the testing unit (16) is integrated in a core network (70) of the mobile phone network (10), in particular that the testing unit (16) is integrated in a BSC (Base Station Controller) or RNC (Radio Network Controller) of the mobile phone network (10), preferably that at least the first (31) and/or the second (41) and/or the third base station (51) are connected to the BSC and/or the RNC, particularly preferably that the first (31) and the second (41) and the third base station (51) are connected to the BSC or the RNC.

4. The method according to any one of the preceding claims,
**characterized in that**
before the connection (62, 62', 62") is established, the terminal device (20, 20', 20") listens on a signalling channel, in particular that the first (31) and/or the second (41) and/or the third base station (51) transmit on the signalling channel.

5. The method according to Claim 4,
**characterized in that**
the first (31) and/or the second (41) and/or the third base station (51) transmit network-specific parameters on the signalling channel, preferably that the signalling channel is a Broadcast Control Channel (BCCH).

6. The method according to any one of the preceding claims,
**characterized in that**
as part of the rule, an identification code of the terminal device (20, 20', 20") is compared with a list, in particular that, if a given identification code is stored on the list the connection (62, 62', 62") to the mobile phone network (10) is enabled, and/or in particular the identification code comprises an IMSI (International Mobile Subscriber Identity) and/or a MSISDN (Mobile Subscriber Integrated Services Digital Network Number).

7. The method according to any one of the preceding claims,
**characterized in that**
the position of the terminal device (20, 20', 20") is determined according to at least one of the following methods: determination of the cell ID, Location Area Code (LOC), Timing Advance (TA), U-TDOA (Uplink Time Difference of Arrival), network-supported GPS, OTDOA (Observed Time Difference of Arrival), OTDOA-IPDL (Observed Time Difference of Arrival-Idle Period Downlink) or OTDOA software blanking.

8. The method according to any one of the preceding claims,
**characterized in that**
the position of the terminal device (20, 20', 20") is determined by measuring at least one network variable (71), in particular that the network variable (71) is a field strength and/or a transit time and/or in particular the terminal device (20, 20', 20") measures the network variable (71), the terminal device (20, 20', 20") transmits the network variable (71) to the mobile phone network (10) and
the mobile phone network (10) determines the position of the terminal device (20, 20', 20") from the network variable (71), in particular that the position of the terminal device (20, 20', 20") is determined in the testing unit (16).

9. The method according to Claim 8,
**characterized in that**
within the second position area (40) at least one of the network variables (71) is measured at a plurality of locations for a plurality of base stations (31, 41, 51), wherein in particular the terminal device (20, 20', 20") measures at least one network variable (71) for a plurality of base stations (31, 41, 51) respectively, the terminal device (20, 20', 20") transmits the network variables (71) to the mobile phone network (10) and/or to the testing unit (16) and the network variables (71) are compared with the measured network variables (71) to determine the location.

10. The method according to any one of Claims 8 or 9,
**characterized in that**
the measurement of the network variable (71) is carried out by the terminal device (20, 20', 20") after a period of time has elapsed, particularly preferably that the network variable (71) is transmitted to the mobile phone network as part of a report, in particular of a measurement report.

11. The method according to any one of Claims 8 to 10,
**characterized in that**
the measurement of the network variable (71) is triggered by the testing unit (16), particularly preferably that the measurement of the network variable (71) is triggered by a command from the testing unit (16) to the terminal device (20, 20', 20"), in particular that the command is part of a SIM Application Toolkit.

12. The method according to any one of the preceding claims,
**characterized in that**
the method is integrated in a CAMEL structure (Customized Applications for Mobile network Enhanced Logic).

13. The method according to any one of the preceding claims,
**characterized in that**
the mobile phone network (10) is operated according to at least one of the following standards: 4G, UMTS (Universal Mobile Telecommunications System) and/or GSM (Global System for Mobile Communications).

14. Testing unit (16) for suppressing the use of a mobile phone network (10) in an area (15), wherein
the testing unit (16) has a communication means and an evaluation means,
a connection (62, 62', 62") to a terminal device (20, 20', 20") can be set up using the communication means,
a presence of the terminal device (20, 20', 20") in a first (30), second (40) or third position area (50) can be determined using the evaluation means, in such a manner that
the testing unit (16) registers in which of three position areas (30, 40, 50) a data terminal device (20, 20', 20") resides, wherein
- the testing unit (16) suppresses a connection (62, 62', 62") to the mobile phone network (10) when the terminal (20, 20', 20") is located within the first position area (30), depending on at least one rule, wherein at least a part of the area (15) is covered by the first position area (30),
- a position can be determined for a terminal device (20, 20', 20") which is located within the second position area (40),
using the testing unit (16) a connection (62, 62', 62") of the terminal device (20, 20', 20") can be suppressed if the exact geographical position of the terminal device (20, 20', 20") lies within the area (15), and using the testing unit (16) a connection (62, 62', 62") of the terminal device (20, 20', 20") can be carried out if the exact geographical position of the terminal device (20, 20', 20") lies outside the area (15), wherein the second position area (40) borders the first position area (30) at least in some areas,
- using the testing unit (16) a connection (62, 62', 62") of a terminal device (20, 20', 20") can be carried out within the third position area (50), wherein the third position area (50) borders the second position area (40) at least in some areas,
wherein the first position area (30) is spanned by a radio cell of at least one first base station (31), the second position area (40) is spanned by a radio cell of at least one second base station (41) and the third position area (50) is spanned by a radio cell of at least one third base station (51),
and wherein only the at least one second base station (41) must make an exact position determination of the terminal device (20, 20', 20").

15. The testing unit (16) according to Claim 14, which can be operated according to any one of the methods specified in Claims 1 to 13.

## Revendications

1. Procédé pour la suppression d'une utilisation d'un réseau de téléphonie mobile (10) dans une zone (15), dans lequel
une unité de contrôle (16) enregistre dans laquelle parmi trois zones de position (30, 40, 50) se trouve un appareil final (20, 20', 20"), dans lequel
au moins une partie de la zone (15) est couverte par une première zone de position (30),
l'unité de contrôle (16) opprime une connexion (62, 62', 62") au réseau de téléphonie mobile (10) en fonction d'au moins une règle lorsque l'appareil final (20, 20', 20") se trouve dans la première zone de position (30),
une deuxième zone de position (40) est au moins partiellement adjacente à la première zone de position (30),
la position géographique exacte est déterminée pour un appareil final (20, 20', 20") se trouvant dans la deuxième zone de position (40),
l'unité de contrôle (16) opprime une connexion (62, 62', 62") de l'appareil final (20, 20', 20") dans le cas d'une position géographique exacte de l'appareil final (20, 20', 20") dans la zone (15), et
l'unité de contrôle (16) permet une connexion (62, 62', 62") de l'appareil final (20, 20', 20") dans le cas d'une position géographique exacte de l'appareil final (20, 20', 20") à l'extérieur de la zone (15), une troisième zone de position (50) est au moins partiellement adjacente à la deuxième zone de position (40), et
l'unité de contrôle (16) permet une connexion (62, 62', 62") d'un appareil final (20, 20', 20") dans la troisième zone de position (50),
dans lequel la première zone de position (30) est définie par une cellule radio d'au moins une première station de base (31), la deuxième zone de position (40) est définie par une cellule radio d'au moins une deuxième station de base (41) et la troisième zone de position (50) est définie par une cellule radio d'au moins une troisième station de base (51),
et dans lequel uniquement l'au moins une deuxième station de base (41) est chargée de déterminer la position exacte de l'appareil final (20, 20', 20").

2. Procédé selon la revendication 1,
**caractérisé en ce que**
la première (31) et/ou la deuxième (41) et/ou la troisième station de base (51) est l'un parmi : une BTS (Base Transceiver Station) ou un node B.

3. Procédé selon la revendication 1 ou 2,
**caractérisé en ce que**
l'unité de contrôle (16) est intégrée dans un réseau central (70) du réseau de téléphonie mobile (10), en particulier **en ce que** l'unité de contrôle (16) est intégrée dans un BSC (Base Station Controller) ou un RNC (Radio Network Controller) du réseau de téléphonie mobile (10), de préférence **en ce qu'**au moins la première (31) et/ou la deuxième (41) et/ou la troisième station de base (51) sont raccordées au BSC et/ou au RNC, et mieux, **en ce que** la première (31) et la deuxième (41) et la troisième station de base (51) sont raccordées au BSC ou au RNC.

4. Procédé selon l'une des revendications précédentes,
**caractérisé en ce que**
avant l'établissement de la connexion (62, 62', 62"), l'appareil final (20, 20', 20") intercepte un canal de signalisation, en particulier **en ce que** la première (31) et/ou la deuxième (41) et/ou la troisième station de base (51) émettent sur le canal de signalisation.

5. Procédé selon la revendication 4,
**caractérisé en ce que**
la première (31) et/ou la deuxième (41) et/ou la troisième station de base (51) émettent des paramètres spécifiques au réseau sur le canal de signalisation, de préférence **en ce que** le canal de signalisation est un Broadcast Control Channel (BCCH).

6. Procédé selon l'une des revendications précédentes,
**caractérisé en ce que**
dans le cadre de la règle, un code d'identification de l'appareil final (20, 20', 20") est comparé avec une liste, en particulier **en ce que** la connexion (62, 62', 62") au réseau de téléphonie mobile (10) est permise dans le cas d'un code d'identification enregistré sur la liste, et/ou en particulier **en ce que** le code d'identification comporte une IMSI (International Mobile Subscriber Identity) et/ou un MSISDN (Mobile Subscriber Integrated Services Digital Network Number).

7. Procédé selon l'une des revendications précédentes,
**caractérisé en ce que**
la position de l'appareil final (20, 20', 20") est déterminée selon au moins l'un des procédés suivantes : détermination de l'identification cellulaire, Location Area Code (LOC), Timing advance (TA), U-TDOA (Uplink Time Difference of Arrival), soutien réseau GPS, OTDOA (Observed Time-Difference-of-Arrival), OTDOA-IPDL (Observed Time Difference of Arrival-Idle Period Downlink) ou OTDOA-Software Blanking.

8. Procédé selon l'une des revendications précédentes,
**caractérisé en ce que**
la position de l'appareil final (20, 20', 20") est déterminée par un mesurage d'au moins une taille de réseau (71), en particulier **en ce que** la taille de réseau (71) est une intensité de champ et/ou une durée, et/ou en particulier **en ce que** l'appareil final (20, 20', 20") mesure la taille de réseau (71), l'appareil final (20, 20', 20") transmet la taille de réseau (71) au réseau de téléphonie mobile (10), et
le réseau de téléphonie mobile (10) détermine la position de l'appareil final (20, 20', 20") à partir de la taille de réseau (71), en particulier **en ce que** la position de l'appareil final (20, 20', 20") est déterminée dans l'unité de contrôle (16).

9. Procédé selon la revendication 8,
**caractérisé en ce que**
dans une pluralité de lieux dans la deuxième zone de position (40), au moins l'une des tailles de réseau (71) est mesurée pour une pluralité de stations de base (31, 41, 51), dans lequel l'appareil final (20, 20', 20") mesure en particulier au moins une taille de réseau (71) respectivement pour une pluralité de stations de base (31, 41, 51), l'appareil final (20, 20', 20") transmet les tailles de réseau (71) au réseau de téléphonie mobile (10) et/ou à l'unité de contrôle (16) et les tailles de réseau (71) sont comparées avec les tailles de réseau (71) mesurées pour la détermination des lieux.

10. Procédé selon l'une des revendications 8 ou 9,
**caractérisé en ce que**
le mesurage de la taille de réseau (71) par l'appareil final (20, 20', 20") est réalisé après écoulement d'un laps de temps, de façon particulièrement préférée **en ce que** la taille de réseau (71) est transmise au réseau de téléphonie mobile dans le cadre d'un rapport, en particulier d'un Measurement Report.

11. Procédé selon l'une des revendications 8 à 10,
**caractérisé en ce que**
le mesurage de la taille de réseau (71) est déclenché par l'unité de contrôle (16), de façon particulièrement préférée **en ce que** le mesurage de la taille de réseau (71) est déclenché par un ordre de l'unité de contrôle (16) à l'appareil final (20, 20', 20"), en particulier **en ce que** l'ordre fait partie d'une boîte à outils de carte SIM (SIM Application Toolkit).

12. Procédé selon l'une des revendications précédentes,
**caractérisé en ce que**
le procédé est intégré dans une structure CAMEL (Customized Applications for Mobile Network Enhanced Logic).

13. Procédé selon l'une des revendications précédentes,
**caractérisé en ce que**
le réseau de téléphonie mobile (10) fonctionne conformément à au moins l'une des normes suivantes : 4G, UMTS (Universal Mobile Telecommunications System) et/ou GSM (Global System for Mobile Communications).

14. Unité de contrôle (16) pour la oppression d'une utilisation d'un réseau de téléphonie mobile (10) dans une zone (15), dans laquelle
l'unité de contrôle (16) comporte un moyen de communication et un moyen d'évaluation,
le moyen de communication permet d'établie une connexion (62, 62', 62") à un appareil final (20, 20', 20"),
le moyen d'évaluation permet de déterminer un séjour de l'appareil final (20, 20', 20") dans une première (30), une deuxième (40) ou une troisième zone de position (50), de manière à ce que
l'unité de contrôle (16) enregistre dans laquelle parmi trois zones de position (30, 40, 50) se trouve l'appareil final (20, 20', 20"), dans laquelle
- l'unité de contrôle (16) opprime une connexion (62, 62', 62") au réseau de téléphonie mobile (10) en fonction d'au moins une règle lorsque l'appareil final (20, 20', 20") se trouve dans la première zone de position (30), au moins une partie de la zone (15) étant couverte par la première zone de position (30),
- pour un appareil final (20, 20', 20") se trouvant dans la deuxième zone de position (40), une position géographique exacte peut être déterminée,
l'unité de contrôle (16) permettant de opprimer une connexion (62, 62', 62") de l'appareil final (20, 20', 20") dans le cas d'une position géographique exacte de l'appareil final (20, 20', 20") dans la zone (15), et l'unité de contrôle (16) permettant d'établir une connexion (62, 62', 62") de l'appareil final (20, 20', 20") dans le cas d'une position géographique exacte de l'appareil final (20, 20', 20") à l'extérieur de la zone (15), la deuxième zone de position (40) étant au moins partiellement adjacente à la première zone de position (30),
- l'unité de contrôle (16) permettant d'établir une connexion (62, 62', 62") d'un appareil final (20, 20', 20") dans la troisième zone de position (50), la troisième zone de position (50) étant au moins partiellement adjacente à la deuxième zone de position (40),
dans laquelle la première zone de position (30) est définie par une cellule radio d'au moins une première station de base (31), la deuxième zone de position (40) est définie par une cellule radio d'au moins une deuxième station de base (41) et la troisième zone de position (50) est définie par une cellule radio d'au moins une troisième station de base (51),
et dans laquelle uniquement l'au moins une deuxième station de base (41) est chargée de déterminer la position exacte de l'appareil final (20, 20', 20").

15. Unité de contrôle (16) selon la revendication 14, celle-ci étant apte à fonctionner à l'aide de l'un des procédés selon les revendications 1 à 13.
